# EUROPÄISCHE PATENTANMELDUNG

(11) **EP 1 763 271 A1**
(43) Veröffentlichungstag der Anmeldung: **14.03.2007**
(21) Anmeldenummer: 05019641.9
(22) Anmeldetag: 09.09.2005
(51) Int. Cl.: H04Q 7/38

(54) **Mobilfunksystem zur Behandlung von Gruppenanrufen**

(71) Anmelder: SIEMENS AKTIENGESELLSCHAFT, 80333 München (DE); Siemens S.p.A., 20126 Milano (IT)
(72) Erfinder: Preseren, Rok, Dr., 1260 Ljubljana-Polje (SI); Schmitt, Peter, 36251 Ludwigsau (DE); Visconti, Giovanni, 20069 I-Vaprio d'Adda (IT); Zaus, Robert, Dr., 80686 München (DE)
(74) Vertreter: Berg, Peter

(57) **Zusammenfassung**

Die Erfindung betrifft ein Mobilfunkssystem zur Behandlung von jeweils an eine Gruppe von Funkteilnehmern gerichteten Gruppenanrufen, mit mehreren Mobilvermittlungsstellen, welche jeweils mit zumindest einem Basisstationssystem verbunden sind und zumindest einer die zur Behandlung der Gruppenanrufe erforderlichen Gruppenanrufdaten enthaltenden Gruppenanrufdatenbasis, wobei jeweils einer Gruppe von Funkteilnehmern ein eine vorgegebene Anzahl von Funkzellen umfassender Gruppenversorgungsbereich zugeordnet ist. Vorteilhaft werden die den Gruppenversorgungsbereich betreffenden Gruppenanrufdaten dynamisch angepasst und hierdurch ein dynamischer Gruppenversorgungsbereich ausgebildet.

## Beschreibung

Die Erfindung betrifft ein Mobilfunksystem zur Behandlung von jeweils an eine Gruppe von Funkteilnehmern gerichteten Gruppenanrufen, mit mehreren Mobilvermittlungsstellen, welche jeweils mit zumindest einem Basisstationssystem verbunden sind und zumindest einer die zur Behandlung der Gruppenanrufe erforderlichen Gruppenanrufdaten enthaltenden Gruppenanrufdatenbasis, wobei jeweils einer Gruppe von Funkteilnehmern ein eine vorgegebene Anzahl von Funkzellen umfassender Gruppenversorgungsbereich zugeordnet ist.

Bekannt sind aus Funkzellen bestehende digitale Mobilfunksysteme, beispielsweise auf dem GSM Standard (Global System for Mobil Communication) basierende Mobilfunksysteme, über welche insbesondere Gruppenanrufdienste ("voice group call services") zur Verfügung gestellt werden können. Derartige Gruppenanrufdienste, bei denen jeweils ein Gruppenanruf an eine Gruppe von Funkteilnehmern (kurz: Teilnehmer) gerichtet wird, sind beispielsweise im Standard 3GPP TS 43.068 definiert.

Dabei befinden sich die Teilnehmer der Gruppe in einem - in der Regel aus mehreren Funkzellen bestehenden - statischen Gruppenversorgungsbereich ("group call area"), in welchen sich die Teilnehmer der Gruppe gesteuert über zumindest eine Hauptmobilvermittlungsstelle ("anchor mobile services switching center") und ggf. weiterer Nebenmobilvermittlungsstellen ("relay mobile services switching center") während eines aufgebauten Gruppenanrufs frei bewegen können. Verlässt ein Teilnehmer der Gruppe während eines Gruppenanrufes den statischen Gruppenversorgungsbereich, so wird die Verbindung automatisch unterbrochen.

Ferner ist jeder Gruppenanruf an einer speziellen Teilnehmerrufnummer erkennbar, die beispielsweise eine Versorgungsbereichsinformation ("group call area ID") zur Kennzeichnung des Gruppenversorgungsbereiches und eine Gruppeninformation ("group ID") zur Kennzeichnung der vom Gruppenanruf betroffenen Gruppe von Teilnehmern aufweist. Die Realisierung derartiger räumlich gebundener Gruppenanrufe in einem Mobilfunksystem erfordert eine statische Datenhaltung in einer Gruppenanrufdatenbasis ("group call register"). Der Aufbau eines Gruppenanrufes zu einer Mehrzahl von Funkteilnehmern wird beispielsweise durch ein ausgewähltes Gruppenmitglied ("dispatcher") initiiert.

Die Hauptvermittlungsstelle ist jeweils mit den Nebenvermittlungsstellen verbunden, an welche jeweils zumindest ein Basisstationssystem ("base station system") angeschlossen ist. Durch ein Basisstationssystem wird zumindest eine Funkzelle erzeugt. Die einzelnen sich teilweise überlappenden Funkzellen bilden in Ihrer Gesamtheit den Versorgungsbereich eines Mobilfunksystems aus, innerhalb dessen eine drahtlose Kommunikationsverbindung von bzw. zu einer oder mehreren Mobilstationen ("mobile stations") einzelner Funkteilnehmern aufgebaut, aufrechterhalten und abgebaut werden können.

Insbesondere werden zum Aufbau eines Gruppenanrufs durch die Hauptmobilvermittlungsstelle die jeweiligen Netzwerkressourcen, beispielsweise physikalische Verbindungspfade, Übertragungskanäle sowie Signalisierungsleitungen zwischen der Hauptmobilvermittlungsstelle und den daran angeschlossenen Nebenmobilvermittlungsstelle sowie die physikalische Verbindungspfade und Signalisierungsleitung zwischen der jeweiligen Haupt- bzw. Nebenmobilvermittlungsstelle und einem zugeordneten Basisstationssystem reserviert, und zwar für den gesamten Gruppenversorgungsbereich über die gesamte Zeitdauer des Gruppenanrufes.

Zwar werden gemäß TS 43.068 zur dynamischen Reservierung derartiger Netzwerkressourcen, insbesondere von Übertragungskanälen in den jeweiligen Funkzellen, bereits Mittel bereitgestellt, jedoch kann hierdurch nicht verhindert werden, dass Teilnehmer eines Gruppenanrufes, die den statischen Gruppenversorgungsbereich verlassen, vom Gruppenanruf getrennt werden oder das potentielle neue Teilnehmer, die sich außerhalb des Gruppenversorgungsbereich befinden, nicht in die Anrufergruppe aufgenommen werden können. Eine Anpassung des Gruppenversorgungsbereiches ist ausschließlich durch die händische Eingabe von Administrationsbefehlen möglich.

Zum Bereitstellen von Gruppenanrufdiensten für Gruppen, deren Teilnehmer eine große räumliche Entfernung zueinander aufweisen, ist es ferner erforderlich, einen umfangreichen Gruppenversorgungsbereich für die jeweilige Gruppe bereitzustellen, was wiederum beispielsweise aufgrund der unnötigen Reservierung einer Vielzahl von physikalischen Verbindungspfaden eine enorme Verschwendung von Netzwerkressourcen nach sich zieht. Darüber hinaus ist standardgemäß die Anzahl der Funkzellen eines Versorgungsbereiches limitiert, insbesondere um den Signalisierungsaufwand sowie die Verbindungsaufbauzeiten für derartige Gruppenanrufe niedrig zu halten, welcher durch eine hohe Anzahl von Funkzellen deutlich erhöht würde. Auch ist die Kapazität der bestehenden Gruppenanrufdatenbasen begrenzt.

Der Erfindung liegt somit die Aufgabe zugrunde, ein Mobilfunksystem zur Behandlung von Gruppenanrufen anzugeben, bei dem die Teilnehmer eines Gruppenanrufes während der Gesprächsdauer des Gruppenanrufes zwischen nahezu beliebigen Funkzellen des Mobilfunksystems wechseln können, ohne eine Vielzahl von Netzwerkressourcen reservieren zu müssen und das außerhalb des Gruppenversorgungsbereiches befindliche Teilnehmer ebenfalls in die Gruppe der Teilnehmer eines Gruppenanrufes eingebunden werden können.

Die Aufgabe wird durch ein Mobilfunksystem gemäß Patentanspruch 1 gelöst. Weitere vorteilhafte Ausgestaltungen des erfindungsgemäßen Mobilfunksystems sind den weiteren Ansprüchen zu entnehmen.

Der wesentliche Gedanke des erfindungsgemäßen Mobilfunksystems ist darin zu sehen, dass die den Gruppenversorgungsbereich betreffenden Gruppenanrufdaten dynamisch angepasst werden. Die dynamische Anpassung der Gruppenanrufdatenbasis an das aktuelle Nutzungsverhalten bzw. die örtlichen Teilnehmerpositionen innerhalb des Mobilfunksystems ermöglicht die Realisierung von Gruppenanrufen über nahezu beliebig große Entfernungen ohne die Reservierung von umfangreichen Netzwerkressourcen.

Die vorliegende Erfindung wird nachfolgend an einem Ausführungsbeispiel anhand einer Figur näher erläutert.

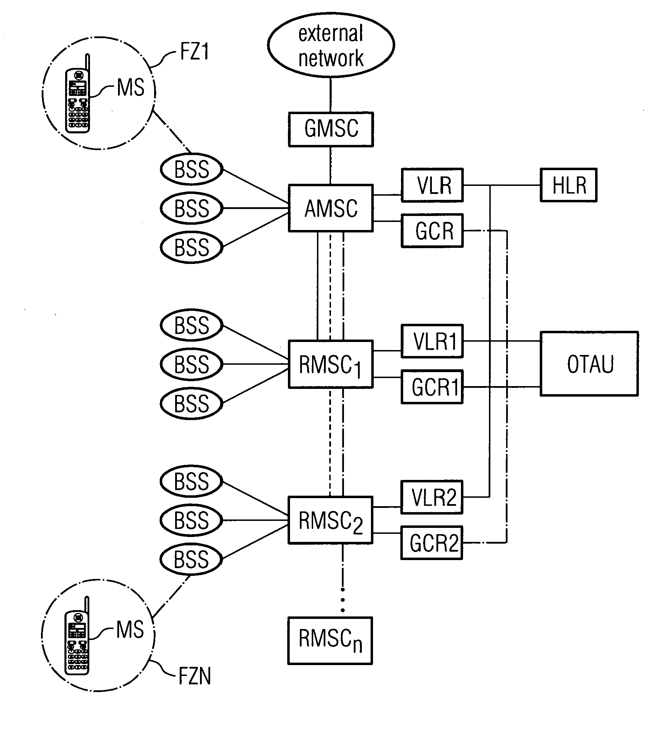

In der Figur ist in einem schematischen Blockschaltbild beispielhaft ein Mobilfunksystem, basierend auf dem GSM Standard, dargestellt. Das Mobilfunksystem umfasst beispielsweise mehrere Basisstationssysteme BSS sowie Mobilvermittlungsstellen AMSC, RMSC1 - RMSCn, GMSC sowie mehrere Datenbasen VLR, GCR, HLR und eine OTA-Server/dynamic group Einheit OTAU. Hierbei ist zumindest eine der Mobilvermittlungsstellen AMSC, RMSC1 - RMSCn, GMSC als Hauptvermittlungsstelle AMSC sowie weitere als Nebenvermittlungsstellen RMSC1 - RMSCn und zumindest eine als Zugangsmobilvermittlungsstelle GMSC ausgebildet.

An die Hauptvermittlungsstelle AMSC sowie die Nebenvermittlungsstellen RMSC1 - RMSCn ist jeweils zumindest ein Basisstationssystem BBS angeschlossen, welche jeweils so genannte Funkzellen FZ1 bis FZN erzeugt. Der gesamte Versorgungsbereich des Mobilfunksystems ist durch die Anzahl der Funkzellen FZ1 - FZN festgelegt, in denen der Verbindungsaufbau über eine Luftschnittstelle beispielsweise vom Mobilfunksystem über die Basisstationssysteme BSS zu den Mobilstationen MS erfolgt. Für den Aufbau des Gruppenanrufes werden bevorzugte Funkzellen FZ1 - FZN aus dem gesamten Versorgungsbereich des Mobilfunksystems ausgewählt, die gemeinsam betrachtet den Gruppenversorgungsbereich bilden.

Die unterschiedlichen Mobilvermittlungsstellen AMSC, RMSC1 - RMSCn sind zur Realisierung der mobilfunkspezifischen Vermittlungsfunktionen zur Verbindungssteuerung vorgesehen. Hierbei ist jeweils zumindest ein Basisstationssystem BSS einer Mobilvermittlungsstelle AMSC, RMSC1 - RMSCn zugeordnet, welche zur Durchführung von das jeweilige Basisstationssystem BSS betreffenden mobilfunkspezifischen Vermittlungsfunktionen vorgesehen ist.

Beispielsweise kann jede der Mobilvermittlungsstellen AMSC, RMSC1 - RMSCn eine Kommunikationsverbindung von dem Mobilfunksystem zu einem Festnetz, beispielsweise dem öffentlichen Fernsprechnetz PSTN oder zu einem weiteren Datennetz sowie zu einem Mobilfunksystem eines weiteren Netzwerkbetreibers aufbauen. Bei einer Kommunikationsverbindungen zwischen zwei Mobilstationen MS innerhalb des Mobilfunksystem kann der Verbindungsaufbau zwischen einer Mobilvermittlungsstelle, beispielsweise der Hauptmobilvermittlungsstelle AMSC und einer weiteren Mobilvermittlungsstelle, beispielsweise einer der Nebenmobilvermittlungsstellen RMSC1 - RMSCn oder innerhalb ein und derselben Mobilvermittlungsstelle AMSC, RMSC1 - RMSCn erfolgen.

Die beispielsweise zumindest an die Hauptmobilvermittlungsstelle AMSC angeschlossene Zugangsmobilvermittlungsstelle GMSC bildet die Schnittstelle für die jeweils aus einem anderen Telekommunikationssystem ankommenden Anrufe bzw. für die zu einem anderen Telekommunikationssystem abgehenden Anrufe.

Jeder der Mobilvermittlungsstellen AMSC, RMSC1 - RMSCn ist zumindest eine Teilnehmerdatenbasis ("Visitor Location Register") LR1 - LRn zugeordnet, welche die Teilnehmerdaten, die für die Verbindungsbehandlung derjenigen Teilnehmer, die sich aktuell in dem einer Mobilvermittlungsstelle AMSC, RMSC1 - RMSCn zugeordneten Versorgungsbereich aufhalten, bereitstellt. Darüber hinaus ist im Mobilfunksystem zumindest eine zentrale Teilnehmerdatenbasis ("home location register") HLR vorgesehen, welche mit den einzelnen Teilnehmerdatenbasen LR1 - LRn verbunden ist. In der zentralen Teilnehmerdatenbasis HLR werden die Teilnehmerdaten der im Mobilfunksystem registrierten Teilnehmer permanent und zusätzlich Informationen über die Zugangsberechtigung eines Funkteilnehmers zum Mobilfunksystem zentral gespeichert. Zusätzlich enthält die zentrale Teilnehmerdatenbasis HLR Informationen über die für den Teilnehmer aufgrund seines aktuellen Aufenthaltsorts innerhalb des Mobilfunksystems zuständige Teilnehmerdatenbasen LR1 - LRn.

Zur Behandlung von Gruppenanrufen, die jeweils an eine Gruppe von Teilnehmern gerichtet sind, ist gemäß dem Standard TS 43.068 zusätzlich zu einer Teilnehmerdatenbasis VLR1 - VLRn jeder der Mobilvermittlungsstellen AMSC, RMSC1 - RMSCn jeweils eine Gruppenanrufdatenbasis ("group call register") GCR, GCR1 - GCRn vorgesehen, welche die Gruppenanrufdaten zur Behandlung von Gruppenanrufen enthalten.

Die Gruppenanrufdaten enthalten beispielsweise eine Liste derjenigen Funkzellen FZ1 - FZN, die den Gruppenversorgungsbereich bilden und somit zum Aufbau eines Gruppenanrufes innerhalb des Gruppenversorgungsbereiches zur Verfügung stehen. Dabei wird mittels einer Versorgungsbereichsinformation ("group call area ID") zur Kennzeichnung des Gruppenversorgungsbereiches auf die Liste der dem Gruppenversorgungsbereich angehörenden Funkzellen FZ1 - FZN verwiesen und durch eine Gruppeninformation ("group ID") die einer Gruppe angehörenden Teilnehmern gekennzeichnet. Darüber hinaus umfassen die Gruppenanrufdaten beispielsweise eine Liste von ausgewählten Teilnehmern der zugeordneten Gruppe, die entweder zum Starten eines derartigen Gruppenanrufs oder zum Auslösen des Gruppenanrufs berechtigt sind.

### Einrichten einer Gruppenmitgliedschaft

Durch den Netzwerkoperator wird eine dynamische Gruppe im Mobilfunksystem dadurch definiert, dass bestimmten Teilnehmern in deren zugeordneten Gruppenanrufdatenbasis GCR, GCR1 - GCRn zur Festlegung eines Gruppenversorgungsbereiches zumindest eine Versorgungsbereichsinformation sowie eine spezifische Gruppeninformation zugeordnet wird. Die einzelnen der dynamischen Gruppe angehörigen Teilnehmer werden hierbei mittels Ihrer Mobilfunknummer bzw. "Mobile Subscriber Integrated Services Digital Netzwerk Number (MSISDN)" definiert.

Die Aufnahme eines Teilnehmers zu einer Gruppe wird jedem Gruppenteilnehmer über eine erste Short Message Service (SMS)-Nachricht bzw. OTA-SMS-Nachricht mitgeteilt, welche beispielsweise auf der SIM-Karte der Mobilstation MS des jeweiligen Teilnehmers gespeichert wird. Die Vorgehensweise ist u.a. unter dem Begriff OTA = "over the air" Aktivierung bekannt. Hierzu ist beispielsweise im Mobilfunksystem die OTA-Server/dynamic group call-server-Einheit OTAU vorgesehen, die jeweils mit der zentralen Teilnehmerdatenbasis HLR, den einzelnen Teilnehmerdatenbasen VLR1 - VLRn sowie den Gruppenanrufdatenbasen GCR, GCR1 - GCRn in Verbindung steht. Die OTA-Server/dynamic group call-server-Einheit OTAU ermöglicht die Erzeugung und Aktualisierung der aktuellen Teilnehmerlisten des Gruppenanrufs sowie die Erzeugung von für einen Gruppenanruf erforderlichen Verbindungsparametern. Ferner wird mittels der OTA-Server/dynamic group call-server-Einheit OTAU die zur Aufnahme der einzelnen Teilnehmer erforderlichen ersten OTA-SMS-Nachrichten erzeugt sowie die zugehörigen Teilnehmerdaten im zentralen Teilnehmerdatenbasis HLR und den einzelnen Teilnehmerdatenbasen VLR1 - VLRn sowie die Gruppenanrufdaten den Gruppenanrufdatenbasen GCR, GCR1 - GCRn aktualisiert. Die in der OTA-Server/dynamic group call-server-Einheit OTAU erzeugten OTA-SMS-Nachrichten werden über ein SMS Service Center (nicht in der Figur dargestellt) gemäß dem Standard TS 23.040 an die mobilen Teilnehmer übertragen.

In einer ersten Ausführungsform der Erfindung können beispielsweise die Gruppenanrufdaten gemäß der Empfehlung TS 43.068 ausgebildet sein. Hierzu wird beim Aufbau eines Gruppenanrufes das standardisierte Verfahren zur Abfrage der Gruppenanrufdatenbasen GCR, GCR1 - GCRn in der jeweils zugeordneten Mobilvermittlungsstelle AMSC, RMSC1 - RMSCn durchgeführt. Hierbei wird einer dynamischen Gruppe eine hinsichtlich des Mobilfunksystems eindeutige Gruppeninformation ("group ID") zugeordnet.

In einer alternativen Ausführungsform der Erfindung weisen die Gruppenanrufdaten zusätzlich zu den Gruppeninformationen ("group ID") die zuvor beschriebenen Versorgungsbereichsinformationen ("group call area ID") auf, zu deren Auswertung eine Modifizierung des standardgemäßen Abfrageverfahrens erforderlich ist. Vorteilhaft können durch die Zuordnung der Versorgungsbereichsinformationen mehrere dynamische Gruppenanrufe mit derselben Gruppeninformation in einem Mobilfunk nahezu simultan nebeneinander vermittelt werden. Darüber hinaus können Gruppenanrufe, welche dieselbe Gruppeninformation aufweisen, jedoch eine unterschiedliche Versorgungsbereichsinformation besitzen, mittels unterschiedlicher Hauptvermittlungsstellen AMSC verwaltet werden. Dadurch können zur Initialisierung eines Gruppenanrufes unterschiedliche Hauptmobilvermittlungsstellen AMSC ausgewählt werden, beispielsweise diejenigen, die die geringste Entfernung zu den Standorten einer Mehrzahl der Teilnehmer des zugehörigen Gruppenanrufes aufweisen, um hierdurch unnötigen Signalisierungswand zu vermeiden.

Die vorgegebenen Gruppenversorgungsbereiche bestehen hierbei beispielsweise aus denjenigen Funkzellen FZ1 - FZN, in denen die Mehrzahl der an dem Gruppenanruf teilnehmenden Teilnehmer erwartet wird. Hierzu wird die nach Erhalt der ersten OTA-SMS-Nachricht durch die jeweiligen Mobilstation MS erzeugte Bestätigungsnachricht hinsichtlich der darin enthaltenen Ortsinformationen, beispielsweise mittels der OTA-Servers/Dynamic Group Call Servers Einheit OTAU ausgewertet, um einen geeigneten Gruppenversorgungsbereich für die jeweilige Teilnehmergruppe eines Gruppenanrufes festzulegen.

Die in den zugeordneten Gruppenanrufdatenbasen GCR, GCR1 - GCRn enthaltenen Datensätze sind gemäß dem Standard TS 43.068 organisiert. Weitere derzeitig nicht dem vorgegebenen Gruppenversorgungsbereich zugeordnete Mobilvermittlungsstellen MSC innerhalb des Mobilfunksystems können im Laufe der Gesprächsdauer eines Gruppenanrufes ebenso als nebengeordnete Nebenmobilvermittlungsstellen RSMCs konfiguriert werden, und zwar dann, wenn ein Teilnehmer eines Gruppenanrufes den vorgegebenen Gruppenversorgungsbereich verlässt.

Erfindungsgemäß werden hierzu ebenfalls die diese Mobilvermittlungsstellen MSCs zugeordneten Gruppenanrufdatenbasen GCR1 - GCRn analog zu den bereits im Einsatz befindlichen Gruppenanrufdatenbasen GCR1 - GCRn konfiguriert. Beispielsweise wird hierzu die Adresse der Hauptmobilvermittlungsstelle AMSC der jeweiligen Gruppe als Referenzdatum gespeichert. Die in der neu hinzugefügten Gruppenanrufdatenbasis GCR1 - GCRn enthaltene Liste der Funkzellen bzw. die Versorgungsbereichsinformation, welche den Gruppenversorgungsbereich definiert, weist jedoch beispielsweise keine Einträge auf. Zusätzlich wird in allen weiteren, den vorgegebenen Gruppenanrufbereich zugeordneten Gruppenanrufdatenbasen GCR1 - GCRn ein neuer Gruppenanrufparameter zugeordnet. Der neu zugeordnete Gruppenanrufparameter gibt an, dass die zugehörige Gruppeninformation der Anrufergruppe als eine dynamischen Anrufergruppe ausgebildet ist, d.h. dass der Gruppenversorgungsbereich dynamisch angepaßt wird.

### Anzeige des Beginns eines Gruppenanrufs an die vorgegebenen Gruppenteilnehmer:

Alle potentiellen Teilnehmer eines Gruppenanrufes werden über den Beginn eines bevorstehenden Gruppenanrufs informiert. Hierbei kann die Information über den Beginn eines bevorstehenden Gruppenanrufes über eine zweite SMS-Nachricht separat von der ersten SMS-Nachricht bzw. OTA-SMS-Nachricht übertragen werden oder bereits in der ersten SMS-Nachricht enthalten sein. Die zweite SMS-Nachricht kann beispielsweise die Gruppeninformation oder die kompletten Gruppenanrufdaten enthalten. Darüber hinaus können in der zweiten SMS-Nachricht geplante Anfangs- und/oder Endzeiten des Gruppenanrufs mit übermittelt werden.

Beim Empfang einer zweiten SMS-Nachricht ohne Anfangszeitpunkt in der Mobilstation MS wird durch den Teilnehmer die gewünschte Teilnahme an dem bevorstehenden Gruppenanruf mittels einer vorzugsweise durch die Mobilstation MS automatisch generierte "Voice Group Call SETUP"-Nachricht mittels der Gruppeninformation oder den Gruppenanrufdaten an das Mobilfunksystem gesendet. Dies findet insbesondere dann statt, wenn nach einer vorgegebenen Zeitspanne in der Mobilstation MS keine Anzeige, dass der Gruppenanruf mit der vorgegebenen Gruppeninformation oder der vorgegebenen Gruppenanrufdaten bereits in der Funkzelle aufgebaut ist, vorzugsweise über den Notification Signalisierungskanal (NCH) erfolgt.

Beim Empfang einer SMS-Nachricht mit einem Startzeitpunkt und nach Bestätigung der gewünschten Teilnahme am Gruppenanruf durch den Teilnehmer wird automatisch beim Erreichen der Startzeit durch die Mobilstation MS die "Voice Group Call SETUP"-Nachricht zusammen mit der Gruppeninformation und/oder den Gruppenanrufdaten an das Mobilfunksystem übertragen, sofern die Mobilstation MS nicht zuvor eine Anzeige über den Notification Signalisierungskanal (NCH) empfängt.

In einer bevorzugten Ausführungsform wird durch die Mobilstation MS eine zufällig erzeugte Zeitdauer zu der vorgegebenen Zeitdauer bzw. der Startzeit addiert, so dass unterschiedliche Mobilstationen MS Ihre "Voice Group Call SETUP"-Nachrichten zu unterschiedlichen Zeitpunkten absenden und dadurch die "Voice Group Call SETUP"-Nachrichten der unterschiedlichen Mobilstationen MS zu unterschiedlichen Zeitpunkten im Mobilfunksystem eintreffen. Hierdurch wird eine ressourcenschonendere Verarbeitung der "Voice Group Call SETUP"-Nachrichten im Mobilfunksystem möglich.

### Aufbau eines Gruppenanrufs

Beim Empfang einer "Voice Group Call SETUP"-Nachricht eines Teilnehmers aus dem Gruppenversorgungsbereich durch die zugeordnete Mobilvermittlungsstelle AMSC, RMSC1 - RMSCn wird der Gruppenanruf aufgebaut in dem vorgegebenen Gruppenversorgungsbereich aufgebaut. Besteht bereits ein dynamischer Gruppenanruf, so wird der die "Voice Group Call SETUP"-Nachricht absendende Teilnehmer zu den Zuhörern des Gruppenanrufs hinzugefügt.

Befindet sich die die "Voice Group Call SETUP"-Nachricht initiierende Mobilstation MS außerhalb des für den gewünschten Gruppenanruf vorgegebenen Gruppenversorgungsbereiches und die übermittelte Gruppeninformation ist einem dynamischen Gruppenanruf zugeordnet, so wird der Gruppenversorgungsbereich innerhalb des Mobilfunksystems um die aktuelle Funkzelle des die "Voice Group Call SETUP"-Nachricht absendenden Teilnehmers erweitert und der Gruppenanruf unter Berücksichtigung des erweiterten Gruppenanrufbereichs aufgebaut sowie der neue Teilnehmer bei einem bestehenden Gruppenanruf als Zuhörer angefügt.

Ist die der neuen Funkzelle zugeordnete Mobilvermittlungsstelle AMSC, RMSC1 - RMSCn nicht Teil der im Gruppenversorgungsbereich befindlichen Mobilvermittlungsstellen AMSC, RMSC1 - RMSCn, so wird diese als neue Nebenmobilvermittlungsstelle RMSC1 - RMSCn zugeordnet. Im speziellen wird nach Erhalt der "Voice Group Call SETUP"-Nachricht, welche die Gruppeninformation enthält, in der zugehörigen Mobilvermittlungsstelle AMSC, RMSC1 - RMSCn bzw. der dieser zugeordneten Teilnehmerdatenbasis VRL1 - VRLn die Zugehörigkeit des die "Voice Group Call SETUP"-Nachricht initiierenden Teilnehmers zur Gruppe überprüft.

Bei erfolgreicher Überprüfung wird durch die jeweilige Mobilvermittlungsstelle AMSC, RMSC1 - RMSCn die Gruppenanrufdatenbasis GCR1 - GCRn durch Angabe der Gruppeninformation und einer Funkzelleninformation ("cell identity") abgefragt. Der Gruppenanrufdatenbasis GCR1 - GCRn entnimmt die zugehörige Mobilvermittlungsstelle AMSC, RMSC1 - RMSCn Informationen darüber, ob der Gruppenanruf bereits aufgebaut ist und im Falle eines dynamischen Gruppenanrufes, ob die betrachtete Funkzelle bereits dem Gruppenanrufbereich zugeordnet ist. Ist dies nicht der Fall, so wird diese automatisch dem Gruppenanrufbereich zugeordnet.

Ist die Nebenmobilvermittlungsstelle RMSC1 - RMSCn noch nicht Teil des vorgegebenen Gruppenversorgungsbereiches, so wird gemäß dem Standard TS 43.068 eine "ISUP message INITIAL ADDRESS" Nachricht an die zugehörige Hauptmobilvermittlungsstelle AMSC gesendet. Die Adresse der rufenden Teilnehmer in der "INITIAL ADDRESS MESSAGE" Nachricht entspricht der Adresse der Hauptvermittlungsstelle AMSC. Zusätzlich wird in der Nebenmobilvermittlungsstelle RMSC1 - RMSCn die eigene Adresse in der "INITIAL ADDRESS MESSAGE" Nachricht in einem vorgesehenen Informationselement, beispielsweise der "Calling Party Address" oder der "Generic Number" mitübermittelt.

Nach Erhalt der genannten Adressparameter durch die Hauptvermittlungsstelle AMSC werden bereits bestehende passender Verbindungspfade bzw. Signalisierungsverbindungen zu der Nebenvermittlungsstelle RMSC1 - RMSCn für den vorgegebenen Gruppenanruf ermittelt. Besteht noch kein derartiger Verbindungspfad bzw. Signalisierungspfad zwischen den betrachteten Mobilvermittlungsstellen AMSC, RMSC1 - RMSCn, so wird die betrachtete Mobilvermittlungsstelle als neue Nebenmobilvermittlungsstelle RMSC1 - RMSCn für den Gruppenanruf konfiguriert.

Erfindungsgemäß enthalten die Gruppenanrufdaten die Versorgungsbereichsinformation sowie die Gruppeninformationen, welche in der "Voice Group Call SETUP"-Nachricht an die Mobilvermittlungsstelle MSC übermittelt wurden. Ausgehend hiervon wird durch die zugeordnete Nebenmobilvermittlungsstelle RMSC1 - RMSCn mittels der Teilnehmerdatenbasis die Gruppeninformation dadurch ermittelt, dass die letzten k Stellen der Gruppenanrufdaten ausgelesen werden, insbesondere dann, wenn sämtliche im Mobilfunksystem verwendeten Gruppeninformationen dieselbe Länge aufweisen, wobei k der Länge einer Gruppeninformation innerhalb des Mobilfunksystems entspricht. Alternativ können die letzten Stellen der Gruppenanrufdaten mit vorgegebenen Gruppeninformationen verglichen werden, insbesondere mit denen, die innerhalb des Mobilfunksystems den dynamischen Gruppenanrufen zugeordnet sind.

Standardgemäß sind in der Gruppenanrufdatenbasis GCR1 - GCRn unterschiedliche Daten abhängig von der abgefragten Gruppeninformationen oder der Gruppenanrufdaten vorgesehen (siehe hierzu TS 43.068, subclause 11.5). Enthält die "Voice Group Call SETUP"-Nachricht Gruppenanrufdaten, so werden durch die Nebenmobilvermittlungsstelle RMSC1 - RMSCn die Gruppenanrufdaten die Funkzelleninformation der Funkzelle, in der sich der initiierenden Teilnehmer befindet als Indikator als Anfrage mit Gruppeninformation gewertet. Sind die Gruppenanruf-daten bereits in der Nebenmobilvermittlungsstelle RMSC1 - RMSCn bekannt, so kann die Ermittlung der Gruppenanrufdaten unter Auswertung der genannten Parameter übersprungen werden.

### Dynamische Anpassung des Gruppenversorgungsbereiches an die örtliche Position der Teilnehmer:

Wechselt der unmittelbar sprechende Teilnehmer eines Gruppenanrufs von einer in dem Gruppenversorgungsbereich befindlichen Funkzelle FZ1 - FZN in eine benachbarte Funkzelle FZ1 - FZN, welche dem Gruppenversorgungsbereich nicht angehört, so wird diese neue Funkzelle FZ1 - FZN dem Gruppenversorgungsbereich hinzugefügt. Die Steuerung erfolgt hierbei über bekannte Übergabeverfahren.

Hierzu wird durch das zugeordnete Basisstationssystem BSS ein externes Übergabeverfahren gemäß dem Standard TS 48.008 durchgeführt. Hierzu wird eine "HANDOVER REQUIRED" Nachricht an die betroffene Nebenmobilvermittlungsstelle RMSC übermittelt. Anstelle des beschriebenen Verfahrens kann auch das in der Basisstationssystem intern vorgesehene Übergabeverfahren verwendet werden, sofern die Ziel-Funkzelle FZ1 - FZn und die Versorgungsfunkzelle FZ1 - FZn demselben Basisstationssystem BSS zugeordnet sind.

Sind die Zielfunkzelle FZ1 - FZn und die Versorgungsfunkzelle FZ1 - FZn derselben Mobilvermittlungsstelle AMSC, RMSC1 - RMSCn zugeordnet, wird durch die jeweilige Mobilvermittlungsstelle AMSC, RMSC1 - RMSCn das Übergabeverfahren gemäß TS 48.008 durchgeführt und erfindungsgemäß die neue Funkzelle FZ1 - FZn zu dem Gruppenversorgungsbereich hinzugefügt sowie ein Übertragungskanal in der neu hinzugefügten Funkzelle FZ1 - FZn durch die Übermittlung einer "VCGS/VBS ASSIGNMENT REQUEST" Nachricht an das Basisstationssystem BSS aufgebaut bzw. bereit gestellt.

Nach Empfang der "VGCS/VBS ASSIGNMENT REQUEST" Nachricht durch das Basisstationssystem BSS wird zunächst überprüft, ob für den betroffenen Teilnehmer bereits ein Übertragungskanal reserviert ist. Liegt bereits ein reservierter Übertragungskanal für den in der Funkzelle des Basisstationssystems BSS befindlichen Teilnehmer vor, so wird dieser modifiziert und hierdurch den Gruppenanrufübertragungskanälen - wie in TS 43.068 und TS 44.018 beschrieben - zugeordnet. Hierdurch wird sichergestellt, dass lediglich ein Übertragungskanal in der betroffenen Funkzelle für den Gruppenanruf belegt bzw. reserviert wird.

Befindet sich die Zielfunkzelle FZ1 - FZN in dem Verantwortungsbereich einer unterschiedlichen Mobilvermittlungsstelle AMSC, RMSC1 - RMSCn, wird das Übergabeverfahren gemäß der Beschreibung in TS 23.009 AMSC, RMSC1 - RMSCn durchgeführt. Fungiert die genannte Mobilvermittlungsstelle AMSC, RMSC1 - RMSCn bereits als Nebenmobilvermittlungsstelle RMSC, dann wird durch diese die Hauptmobilvermittlungsstelle AMSC über das Hinzufügen der neuen Funkzelle FZ1 - FZN mittels einer "MAP PROCESS GROUP CALL SIGNALLING" Nachricht ("add new cell [cell ID]") informiert.

Wird die neu hinzugefügte Funkzelle FZ1 - FZN durch die Hauptmobilvermittlungsstelle AMSC bereits verwaltet, so fügt diese die neue Funkzelle FZ1 - FZN zum Gruppenversorgungsbereich hinzu und initiiert die Reservierung eines Gruppenanrufübertragungskanals in der genannten Funkzelle FZ1 - FZN mittels Übersendung einer "VGCS/VBS ASSIGNMENT REQUEST" Nachricht an das zuständige Basisstationssystem BSS.

Wird die neue Funkzelle FZ1 - FZN durch eine unterschiedliche Nebenmobilvermittlungsstelle RMSC1 -RMSCn verwaltet, so wird die betrachtete Nebenmobilvermittlungsstelle RMSC1 -RMSCn durch die Hauptvermittlungsstelle AMSC über das Hinzufügen der neuen Funkzelle FZ1 - FZN durch das Senden einer "MAP FORWARD GROUP CALL SIGNALLING" ("add new cell [cell ID]") informiert, sofern die genannte Nebenmobilvermittlungsstelle RMSC1 - RMSCn bereits dem Gruppenversorgungsbereich zugehörig ist.

Ist die Nebenmobilvermittlungsstelle RMSC1 -RMSCn noch nicht Teil des Gruppenversorgungsbereichs, so wird durch die Hauptmobilvermittlungsstelle AMSC der Aufbau eines neuen Verbindungspfad durch die Übersendung der "MAP PREPARE GROUP CALL" Nachricht an die genannte Nebenmobilvermittlungsstelle RMSC1 - RMSCn veranlasst. Hierbei wird durch die Hauptmobilvermittlungsstelle AMSC ein neuer Parameter ("add new cell [cell ID]") in die MAP Operation integriert. Die betroffene nebengeordnete Mobilvermittlungsstelle RMSC1 - RMSCn baut den Gruppenanruf gemäß den im TS 43.068 beschriebenen Verfahren auf und fügt die neue Funkzelle FZ1 - FZN zum Gruppenversorgungsbereich hinzu.

Hierbei kann die neue Funkzelle FZ1 -FZN die einzige der dem Gruppenanrufbereich zugeordnete Funkzelle FZ1 -FZN sein, die durch die Nebenmobilvermittlungsstelle RMSC1 -RMSCn verwaltet wird. Beispielsweise kann die in der Gruppenanrufdatenbasis GCR1 - GCRn befindliche Liste der Funkzellen FZ1 -FZN des Gruppenversorgungsbereiches keine Einträge aufweisen. In diesem Fall ist es erforderlich, dass die Funkzellen FZ1 -FZN bei der Anfrage zur Aufnahme in eine Anrufgruppe dynamisch zum Gruppenversorgungsbereich hinzugefügt werden und die Gruppenanrufdatenbasis GCR in der Hauptmobilvermittlungsstelle AMSC derart konfiguriert wird, dass ein Verbindungsaufbau durch die genannten Nebenmobilvermittlungsstellen RMSC1 - RMCSn ausschließlich dynamisch und auf Anfrage während eines bestehenden Gruppenanruf durchgeführt wird.

In einer zweiten alternativen Ausführungsform wird ein den Gruppenanruf mithörender Teilnehmer, der aus einer Funkzelle FZ1 -FZN in eine weitere benachbarte Funkzelle FZ1 -FZN wechselt, in der noch kein Gruppenanrufübertragungskanal reserviert ist und keine Bekanntgabe des laufenden Gruppenanrufes über den Notification Signalisierungskanal erfolgt ist, wird durch die Mobilstation MS des Teilnehmers automatisch eine "Voice Group Call SETUP" Nachricht mit der Gruppeninformation oder den Gruppenanrufdaten an das Mobilfunksystem gesendet. Wie zuvor beschrieben, wird die Funkzelle durch das Mobilfunksystem zu dem Gruppenversorgungsbereich hinzugefügt und der neu hinzugefügten Funkzelle ein Gruppenanrufübertragungskanal zugeordnet.

### Entfernen von Funkzellen:

Zur Überprüfung, ob sich im Mobilfunksystem als Zuhörer am Gruppenanruf beteiligte Teilnehmer befindet, wird durch das Basisstationssystem BSS das in TS 44.018 spezifizierte "Uplink Reply" Verfahren eingesetzt. Hierbei wird durch das jweilige Basisstationssystem BSS in die "UPLINK FREE" Nachricht eine "Uplink Access Request Indication" Information eingefügt, die an die Funkzellen FZ1 - FZN übertragen wird, sobald der aktuelle Sprecher innerhalb des Gruppenanrufes die Sprecherrolle aufgibt. Eine die "Uplink Access Indication" Information erhaltende Mobilstation MS sendet daraufhin zwei "UPLINK ACCESS" Nachrichten in das Mobilfunksystem zurück, aufgrund derer ein "Reply on Uplink Access Request" auf dem benutzten Gruppenanrufübertragungskanal übertragen wird und hierdurch die Übertragung unmittelbar eingestellt wird.

Erfindungsgemäß wird in denjenigen Funkzellen FZ1- FZN, in denen die "Uplink"-Verbindung nicht zur Übertragung des Sprachsignales des Sprecher benutzt wird, durch das Basisstationssystem BSS zusätzlich eine "Uplink Access Request Indication" Information in die "UPLINK BUSY" Nachricht eingefügt und diese periodisch gesendet. Dies ist insbesondere gemäß TS 43.068 Version 7.0.0. dann der Fall, wenn durch das Mobilfunksystem die Funktionalität "Talker Priority" unterstützt wird.

Gemäß den Standards TS 44.018 bzw. TS 48.008 wird der Gruppenanrufübertragungskanal freigegeben, sobald das Basisstationssystem BSS keine Antwort eines Zuhörers innerhalb der jeweiligen Funkzelle innerhalb einer vorgegebenen Zeitspanne empfängt. Die Übertragung der Ankündigung des Gruppenanrufes über den Notification SIgnalisierungskanal wird jedoch ohne Kanalbeschreibung weiterhin durch das Basisstationssystem BSS durchgeführt und die zugeordnete Mobilvermittlungsstelle AMSC, RMSC1 - RMSCn über den Wechsel mittels einer "VGCS/VBS ASSIGNMENT RESULT" Nachricht mit ausgewählten Kanalinformationen informiert. Die bestehende physikalische Verbindung zwischen der jweiligen Mobilvermittlungsstelle AMSC, RMSC1 - RMSCn und dem zugeordneten Basisstationssystem BSS sowie der zugeordneten "resource controlling SCCP" Verbindung wird weiterhin aufrecht erhalten.

Wird in einer Funkzelle FZ1 -FZN der Gruppenanrufübertragungskanal für eine vorgegebene Zeitspanne abgebaut oder ist dieser bereits abgebaut und die Anzahl der Funkzellen FZ1 -FZN des Gruppenversorgungsbereiches, welche durch die Mobilvermittlungsstelle AMSC, RMSC1 - RMSCn überwacht bzw. verwaltet werden, überschreitet einen vorgegebenen Grenzwert, so wird durch die jeweilige Mobilvermittlungsstelle AMSC, RMSC1 - RMSCn neben der physikalischen Verbindung auch die zugehörigen "resource controlling SCCP" Verbindung zur genannten Funkzelle FZ1 -FZN abgebaut. Darüber hinaus wird die betroffene Funkzelle FZ1 - FZN aus dem Gruppenversorgungsbereich entfernt.

Handelt es sich bei der zu entfernenden Funkzelle FZ1 -FZN um die letzte im Gruppenanrufversorgungsbereich befindliche Funkzelle FZ1 -FZN, welche durch ein Basisstationssystem BSS verwaltet wird, so wird ebenfalls die "call contolling SCCP" Verbindung zwischen dem Basisstationssystem BSS und der zugeorndeten Mobilvermittlungsstelle AMSC, RMSC1 - RMSCn abgebaut.

Wird die zu entfernende Funkzelle FZ1 -FZN über eine Nebenmobilvermittlungsstelle RMSC1 - RMSCn verwaltet, so wird zusätzlich der MAP Dialog und die physikalische Verbindung von der Nebenvermittlungsstelle RMSC1 - RMSCn zur Hauptvermittlungsstelle AMSC abgebaut.

### Beendigung eines Gruppenanrufs:

Eine auf der Teilnehmerliste des Gruppenanrufes befindliche Mobilstation MS, welche in eine Zielfunkzelle FZ1 - FZN wechselt, die sich nicht im Gruppenversorgungsbereich befindet und der somit kein Gruppenanrufübertragungskanal zugeordnet ist, sendet automatisch eine "Voice Group Call SETUP" Nachricht mit der Gruppeninformation oder den Gruppenanrufdaten an das Mobilfunksystem. Im Anschluss daran wird der Gruppenanruf gemäß folgender Verfahren beendet:

Enthält die erste OTA-SMS-Nachricht keine Endzeit für den Gruppenanruf, so wird der Gruppenanruf durch das Mobilfunksystem dadurch beendet, dass mittels der OTA-Server/Dynamic Group Call Server Einheit OTAU eine dritte OTA-SMS-Nachricht erzeugt wird und an sämtliche Teilnehmer des Gruppe versandt wird, die zur Deaktivierung des Gruppenanrufes führt. Enthält die erste OTA-SMS-Nachricht bereits eine Endzeit für den Gruppenanruf, so wird die Mobilstation MS eines zuhörenden Teilnehmers nach Erreichen der vorgegebenen Endzeit die Verbindung zum Mobilfunksystem abbauen.

Der Gruppenanruf kann durch einen "Originator" oder durch einen autorisierten "Dispatcher" - gemäß der in TS 43.068 beschriebenen Weise - oder durch die Hauptvermittlungsstelle AMSC terminiert werden. Dies kann entweder durch einen explizite händischen Eingriff des Systemoperators oder durch ein in der OTA-Dynamic/ Group Call-Server Einheit OATU erzeugtes Steuersignal realisiert werden.

Die Erfindung wurde voranstehend anhand eines Ausführungsbeispiels näher beschrieben. Es versteht sich von selbst, daß zahlreiche Modifikationen sowie Abwandlungen möglich sind, ohne daß dadurch der der Erfindung zugrunde liegende Erfindungsgedanke verlassen wird.

### Bezugszeichenliste

- BSS: Basisstationssystem
- MSC: Mobilvermittlungsstelle
- AMSC: Hauptmobilvermittlungsstelle
- RMSC1 - RMSCn: Nebenvermittlungsstellen
- GMSC: Zugangsvermittlungsstelle
- HLR: zentrale Teilnehmerdatenbasis
- VLR: Teilnehmerdatenbasis
- VLR1 - VLRn: Teilnehmerdatenbasen
- GCR: Gruppenanrufdatenbasis
- GCR1 - GCRn: Gruppenanrufdatenbasen
- FZ1- FZN: Funkzellen
- MS: Mobilstationen
- OTAU: OTA-Servers/Dynamic Group Call Servers Einheit

## Patentansprüche

1. Mobilfunksystem zur Behandlung von jeweils an eine Gruppe von Funkteilnehmern gerichteten Gruppenanrufen, mit mehreren Mobilvermittlungsstellen (AMSC, RMSC1 - RMSCn), welche jeweils mit zumindest einem Basisstationssystem (BSS) verbunden sind und zumindest einer die zur Behandlung der Gruppenanrufe erforderlichen Gruppenanrufdaten enthaltenden Gruppenanrufdatenbasis (GCR, GCR1 - GCRn), wobei jeweils einer Gruppe von Funkteilnehmern ein eine vorgegebene Anzahl von Funkzellen (FZ1 - FZN) umfassender Gruppenversorgungsbereich zugeordnet ist, **dadurch gekennzeichnet,**
**dass** die den Gruppenversorgungsbereich betreffenden Gruppenanrufdaten dynamisch angepasst werden.

2. Mobilfunksystem nach Anspruch 1,
**dadurch gekennzeichnet,**
**dass** die Gruppenanrufdaten zumindest eine Gruppeninformation pro Gruppenanruf umfassen, welche die einer Gruppe zugeordneten Teilnehmer betrifft.

3. Mobilfunksystem nach Anspruch 2,
**dadurch gekennzeichnet,**
**dass** die Gruppenanrufdaten zusätzlich eine Versorgungsbereichsinformation pro Gruppenanruf aufweisen.

4. Mobilfunksystem nach Anspruch 3,
**dadurch gekennzeichnet,**
**dass** die Versorgungsbereichsinformationen einen Verweis auf eine Liste der den Gruppenversorgungsbereich bildenden Funkzellen enthalten.

5. Mobilfunksystem nach einem der vorhergehenden Ansprüche,
**dadurch gekennzeichnet,**
**dass** die Gruppenanrufdaten zusätzlich eine Versorgungsbereichsinformation aufweisen.

6. Mobilfunksystem nach Anspruch 5,
**dadurch gekennzeichnet,**
**dass** zur Zuordnung eines Teilnehmers zu einer Anrufergruppe der den Teilnehmer identifizierenden Mobilfunknummer zumindest die Gruppeninformation, ggf. zusätzlich die Versorgungsbereichsinformation in der zugehörigen Gruppenanrufdatenbasis (GCR, GCR1 - GCRn) zugeordnet wird.

7. Mobilfunksystem nach Anspruch 6,
**dadurch gekennzeichnet,**
**dass** die Aufnahme eines Teilnehmers zu einer Anrufergruppe mittels einer Short Message Service (SMS) Nachricht mitgeteilt wird.

8. Mobilfunksystem nach Anspruch 7,
**dadurch gekennzeichnet,**
**dass** der Empfang der Short Message Service (SMS) Nachricht mittels einer Bestätigungsnachricht von der Mobilstation (MS) des Teilnehmers bestätigt wird.

9. Mobilfunksystem nach Anspruch 8,
**dadurch gekennzeichnet,**
**dass** die mittels der Bestätigungsnachrichten gewonnen Informationen bzgl. des Aufenthaltsortes der Teilnehmer zur Ermittlung derjenigen Funkzellen (FZ1 - FZN) ausgewertet werden, welche dem Gruppenversorgungsbereich zugeordnet werden.

10. Mobilfunksystem nach Anspruch 8,
**dadurch gekennzeichnet,**
**dass** beim Hinzufügen einer neuen Funkzelle (FZ1 - FZN) zum bestehenden Gruppenversorgungsbereich in der jeweils einer Mobilvermittlungsstelle (AMSC, RMSC1 - RMSCn) zugeordneten Gruppenanrufdatenbasis (GCR, GCR1 - GCRn) zur Gruppeninformation ein neuer Gruppenanrufparameter zugeordnet wird, der die Ausbildung der Anrufergruppe als dynamische Gruppe angibt.

11. Mobilfunksystem nach Anspruch 10,
**dadurch gekennzeichnet,**
**dass** den Teilnehmern einer Anrufergruppe mittels der SMS-Nachricht oder einer weiteren SMS-Nachricht das Bevorstehen des Beginns eines Gruppenanrufs mitgeteilt wird.

12. Mobilfunksystem nach Anspruch 8,
**dadurch gekennzeichnet,**
**dass** in der SMS-Nachricht oder in der weiteren SMS-Nachricht neben der Gruppeninformation oder der Gruppenanrufdaten die Anfangs- und/oder Endzeit des bevorstehenden Gruppenanrufs mit übermittelt werden.

13. Mobilfunksystem nach Anspruch 12,
**dadurch gekennzeichnet,**
**dass** nach Erhalt der Gruppeninformation oder der Gruppenanrufdaten in der Mobilstation (MS) eine den Verbindungsaufbau initiierende "Voice Group Call SETUP"-Nachricht erzeugt wird und diese in das Mobilfunksystem gesendet wird.

14. Mobilfunksystem nach Anspruch 13,
**dadurch gekennzeichnet,**
**dass** die Gruppeninformation oder die Gruppenanrufdaten in der "Voice Group Call SETUP" - Nachricht an die zugeordnete Mobilvermittlungsstelle (AMSC, RMCS1 - RMCSn) übermittelt werden.

15. Mobilfunksystem nach einem der vorhergehenden Ansprüche,
**dadurch gekennzeichnet,**
**dass** bei einem Wechsel eines Teilnehmers von einer dem Gruppenversorgungsbereich zugeordneten Funkzelle (FZ1 - FZN) in eine benachbarte außerhalb des Gruppenversorgungsbereichs befindliche Funkzelle (FZ1 - FZN) die benachbarte Funkzelle (FZ1 - FZN) ebenfalls in die Liste der den Gruppenversorgungsbereich bildenden Funkzellen (FZ1 - FZN) mit aufgenommen wird.
